# EUROPÄISCHE PATENTSCHRIFT

(11) **EP 3 588 101 B1**
(45) Veröffentlichungstag und Bekanntmachung des Hinweises auf die Patenterteilung: **02.09.2020**
(21) Anmeldenummer: 18180352.9
(22) Anmeldetag: 28.06.2018
(51) Int. Cl.: G01P 3/481, G01D 5/14

(54) **MASCHINENKOMPONENTE MIT WIEGAND-SENSOR IM FELD EINES DIAMETRALMAGNETEN**
MACHINE COMPONENT WITH WIEGAND SENSOR IN THE FIELD OF A DIMETAL MAGNET
COMPOSANT DE MACHINE POURVU DE CAPTEUR WIEGAND DANS LE CHAMPS D'UN AIMANT DIAMÉTRAL

(43) Veröffentlichungstag der Anmeldung: 01.01.2020
(73) Patentinhaber: Baumer Hübner GmbH, 10589 Berlin (DE)
(72) Erfinder: Dr. Sperling, Tilo, 78333 Stockach (DE); Armbruster, Ulrich, 13437 Berlin (DE); Otto, Kai-Hans, 12526 Berlin (DE); Lehmann, Marco, 15827 Blankenfelde (DE); Kleiner, Daniel, 78259 Mühlhausen-Ehingen (DE); Kurz, Lisa, 78462 Konstanz (DE); Doms, Marco, 14057 Berlin (DE)
(74) Vertreter: Strauss, Steffen

(56) Entgegenhaltungen:
- WO-A1-2004/046735
- DE-A1- 2 744 944
- DE-A1-102007 039 051
- DE-A1-102008 051 479
- DE-A1-102015 101 246

## Beschreibung

Die Erfindung betrifft eine Maschinenkomponente nach dem Oberbegriff des Anspruchs 1.

Aus der DE 10 2006 030 736 B4 ist ein Elektromotor mit einem Wiegand-Sensor bekannt, mit dem die Drehbewegung eines Lüfters vermessen wird, wobei die Lüfterflügel mit Permanentmagneten ausgestattet sind, sodass bei deren Drehung ein magnetisches Wechselfeld erzeugt wird, das den im Wiegand-Sensor vorhandenen Wiegand-Draht beeinflusst, sodass die Drehzahl bestimmt werden kann. Dabei wird der Wiegand-Sensor gegenüber einem Störfeld, das zum Beispiel von einer Bremsspule hervorgerufen wird, über eine Abschirmung abgeschirmt.

Um wiederum mit Hilfe eines Wiegand-Drahtes ein möglichst gutes Detektionssignal zu erhalten, stellt es sich gemäß der US 4 484 090 A als vorteilhaft heraus, Entmagnetisierungseffekte an den Drahtenden zu vermeiden und das Feld entsprechend auszurichten, indem am Rotor, dessen Drehbewegung erfasst werden soll, Balken aus ferromagnetischem Material angebracht werden, um die magnetischen Feldlinien weg von den Drahtenden zu leiten.

In der Druckschrift DE 10 2008 051479 A1 wird eine Sensorbaugruppe für einen Drehgeber beschrieben, der zum Erfassen der Drehbewegung einer Antriebswelle in beiden Richtungen dient. Der Drehgeber besitzt dabei ein zur Abschirmung gegen äußere Magnetfelder vorzugsweise aus ferromagnetischen Material bestehendes Gehäuse, das im Wesentlichen die Form eines Hohlzylinders aufweist und dessen oberes Ende durch ein vorzugsweise aus elektrisch leitfähigen Material bestehenden Deckel verschlossen ist.

Die Druckschrift DE 10 2015 101 246 A1 zeigt ein magnetbasiertes Drehwinkelsystem zum Erfassen einer Drehbewegung einer Antriebswelle. In dieser Anordnung ist eine Abschirmung vorgesehen, die zylindrisch ausgebildet ist und die eine Antriebswelle zumindest in einem Teilbereich umgibt.

Aufgabe der Erfindung ist es, eine Maschinenkomponente mit einem Wiegand-Sensor vorzuschlagen, bei welchem der Sensor bei verbessertem Messsignal einen geringeren Einfluss auf die Bauweise der Maschinenkomponente hat.

Die Aufgabe wird, ausgehend von einer Maschinenkomponente der eingangs genannten Art, durch die kennzeichnenden Merkmale des Anspruchs 1 gelöst.

Durch die in den abhängigen Ansprüchen genannten Maßnahmen sind vorteilhafte Ausführungen und Weiterbildungen der Erfindung möglich.

Die erfindungsgemäße Maschinenkomponente umfasst zunächst einen Rotor zur Ausführung einer Rotationsbewegung um eine Drehachse und einen am Rotor angebrachten, mit dessen Drehbewegung mitrotierenden Permanentmagneten zur Erzeugung eines Nutzmagnetfeldes. Zur Erfassung der Rotationsbewegung wird ein Wiegand-Sensor eingesetzt. Beispielsweise kann mit dem Wiegand-Sensor die Position (z.B. die Winkelstellung der Drehflügel) bzw. die Drehzahl des Rotors ermittelt werden.

Bei dem Wiegand-Sensor handelt es sich um einen sogenannten Impulsdrahtsensor. Der Wiegand-Sensor nutzt bei einer Bauform einen Draht aus zwei parallel, insbesondere koaxial gelagerten Bereichen, von denen jeweils einer weich- und einer hartmagnetisch ist. Wird ein externes Magnetfeld parallel zum Verlauf des Wiegand-Drahtes angelegt, so können die Magnetisierungen der entsprechenden Bereiche geändert werden. Dabei klappt der weichmagnetische Bereich schneller um als der hartmagnetische Bereich. Wird um den Wiegand-Draht entlang seiner Längsachse eine Spule angeordnet, so kann entsprechend eine Spannung in der Spule induziert werden. Jedes Mal dann, wenn Bereiche im Draht umklappen, wird ein Spannungspuls in der Spule induziert.

Ist an einem Rotor ein Permanentmagnet angebracht, und ist ferner der Wiegand-Draht an einer bestimmten Stelle fest installiert, also statisch gegenüber dem Rotor gelagert, so verursacht die Drehung des Rotors mit daran angebrachten Permanentmagneten ein sich wechselndes Magnetfeld. Bei entsprechender Positionierung des Wiegand-Drahtes kann dieser somit zum Beispiel die Drehzahl messen, da mit dem Umklappen einzelner Bereiche Spannungspulse in der Induktionsspule um den Wiegand-Draht induziert werden, sobald sich der mit dem Rotor mitrotierende Permanentmagnet dem Draht nähert und die Feldstärke dieses Nutzfelds zur Ummagnetisierung einzelner Bereiche im Draht ausreicht.

Der Wiegand-Draht ist somit gegenüber dem Rotor statisch angeordnet. Im vorliegenden Fall ist der Wiegand-Draht zusätzlich in einer Ebene senkrecht zur Drehachse angeordnet bzw. ausgerichtet. Erfindungsgemäß wird eine besondere Form eines Permanentmagneten verwendet, um das Nutzmagnetfeld zu erzeugen, nämlich in Form eines Diametralmagneten. Dieser wird unmittelbar auf der Drehachse montiert, d.h. die Drehachse verläuft durch die Trennlinie zwischen Nordpol und Südpol des Diametralmagneten. Die Nord-Süd-Ausrichtung rotiert also mit der Drehung des Diametralmagneten um die Drehachse herum. Die erzeugten Feldlinien bzw. deren Ausrichtung rotieren also ebenfalls in gleicher Weise um die Drehachse. Zudem rotiert der Diametrealmagnet zwar, befindet sich aber entlang der Drehachse und somit in Bezug auf etwaige, entlang der Drehachse angeordnete Sensoren an einer konstanten Stelle.

Die Kombination aus einem Dauermagneten in Form eines Diametralmagneten und die besondere Anordnung, durch die erreicht wird, dass um die Drehachse herum radial ausgerichtete Feldlinien entstehen, die um die Drehachse herum mit dem Rotor rotieren, ermöglichen zahlreiche technische Vorteile:
Das Nutzfeld kann zunächst in vorteilhafter Weise zum einen durch einen einzigen Magneten erzeugt werden. Zum anderen werden durch die Anordnung des Diametralmagneten unmittelbar auf der Drehachse in der Regel keine größeren Unwuchten erzeugt, anders als bei einer aus dem Stand der Technik bekannten Anordnung an einzelnen Rotorflügeln. Somit ist der Einfluss auf die Bauweise der Maschinenkomponente, insbesondere auf die Bauweise eines Rotors geringer, da in die Rotorflügel keine zusätzlichen Magnete integriert werden müssen, die Platz benötigen, eine zusätzlich Masse darstellen und in der Regel somit eine Unwucht erzeugen.

Zudem ermöglicht erfindungsgemäß ein Beeinflussungselement gleichzeitig eine Umlenkung von störenden Magnetfeldern (etwa die anderer Motorenkomponenten) und eine gezieltere Ausrichtung des Nutzmagnetfeldes in Bezug auf den Wiegand-Draht. Die Umlenkung insbesondere starker Störfelder kann auch dazu beitragen, dass die magnetisierten Bereiche nicht zu stark beeinflusst, vor allem nicht dauerhaft ummagnetisiert werden. Um von dem Wiegand-Sensor ein möglichst starkes Signal zu erhalten.

In der Regel ist der Diametralmagnet als Platte ausgeführt. Eine weitere bevorzugte Ausführungsform ist eine zylindrische Ausbildung des Diametralmagneten. Die magnetische Flussdichte wird also im Allgemeinen in einer Ebene senkrecht zur Platte, bzw. in einem Bereich in Nord-Süd-Ausrichtung, größer sein als in anderen Ebenen, die ebenfalls senkrecht zur Platte stehen und eine davon abweichende Ausrichtung besitzen. Somit existiert bei der Drehung des Permanentmagneten um die Drehachse eine bestimmte Ausrichtung, in der das Nutzmagnetfeld aus Sicht des Wiegand-Drahtes am größten ist, sodass der induzierte Spannungspuls sehr deutlich ausfallen kann und die Drehzahl zu bestimmen ist.

Bei einem vorteilhaften Ausführungsbeispiel der Erfindung kann eine Minimierung der Unwucht infolge einer Anbringung des Magnetes auf der Drehachse dadurch erzielt werden, dass der Diametralmagnet hinsichtlich seiner Formgebung in Bezug auf die Drehachse rotationssymmetrisch gewählt wird. Zumindest aber ist es vorteilhaft, wenn der Permanentmagnet in Bezug auf seinen Schnittpunkt mit der Drehachse punktsymmetrisch ausgebildet ist. In der Regel wird davon ausgegangen, dass im Festkörper des Permanentmagneten eine im Wesentlichen homogene Dichteverteilung vorherrscht.

Grundsätzlich kann der Wiegand-Draht durch die Drehachse verlaufen oder auch windschief zur Drehachse angeordnet sein. Eine Bauweise mit z.B. windschiefer Anordnung kann zum Teil durch die Platzbedingungen in der Maschinenkomponente notwendig sein. Im Falle einer Werkzeugmaschine mit angekoppeltem Werkzeug kann es beispielsweise vorkommen, dass weitere bauliche Komponenten wie zum Beispiel die Werkzeugaufnahme dafür sorgen, dass auf der Drehachse unmittelbar weitere Maschinenkomponenten angebracht sind, die eine Anbringung des Wiegand-Drahtes auf der Drehachse erschweren oder unmöglich machen.

Bei der vorteilhaften Weiterbildung der Erfindung kann der Wiegand-Sensor durch einen Hall-Sensor bzw. durch zusätzliche Hall-Elemente ergänzt werden. Ein solcher Hall-Sensor kann dazu verwendet werden, ebenfalls die Rotationsbewegung zu erfassen, insbesondere die Drehzahl bzw. Drehposition des Rotors, vor allem aber auch die Drehrichtung, da der Hall-Sensor eine Hall-Spannung liefert, deren Vorzeichen sich mit der Ausrichtung des Nutzmagnetfeldes und somit der Drehrichtung ändert.

Unter einem Hall-Sensor wird im vorliegenden Fall das gesamte Bauteil verstanden, welches unter Ausnutzung des Hall-Effekts die magnetische Flussdichte (magnetische Induktion) vermisst. Ein einzelnes Hall-Element zur Messung des Hall-Effektes besteht aus einem stromdurchflossenen Körper, der dem zu vermessenden Magnetfeld ausgesetzt wird und bei dem senkrecht zur Stromrichtung eine Spannung, eine sogenannte Hall-Spannung, abgegriffen werden kann, die dadurch entsteht, dass durch das Magnetfeld die fließenden Ladungsträger senkrecht zur Stromrichtung abgelenkt werden. Der größte Effekt tritt auf, wenn die Richtung der magnetischen Induktion senkrecht zur Stromrichtung verläuft, sodass die Hall-Spannung senkrecht zur Stromrichtung und senkrecht zur magnetischen Induktion abgegriffen wird. Ein Hall-Sensor kann also grundsätzlich aus mehreren Hall-Elementen zusammengesetzt sein, sodass der Effekt innerhalb des Sensors mehrfach angewendet und ausgenutzt wird. Da die Hall-Elemente an unterschiedlichen Stellen angeordnet sind, können aber auch Unterschiede in der Feldverteilung bestimmt werden.

In vorteilhafter Weise ist der Wiegand-Sensor vom Permanentmagneten weiter beabstandet als das oder die Hall-Elemente. Aus messtechnischer Sicht erweist sich diese Anordnung deshalb als vorteilhaft, da in größerer Nähe zum Permanentmagneten im Allgemeinen (je nach Feldverteilung) auch höhere magnetische Flussdichten zu erwarten sind. Für die Funktion der Hall-Elemente ist in der Regel eine Mindestflussdichte notwendig, damit der Hall-Sensor zuverlässig arbeitet. Umgekehrt muss ein Wiegand-Draht in der Regel in einem bestimmten Bereich (Intervall) der magnetischen Flussdichte betrieben werden, da ein zu schwaches Magnetfeld gegebenenfalls nicht ausreicht, um die Magnetisierung innerhalb des Wiegand-Drahtes umklappen zu lassen. Ein zu starkes Magnetfeld lässt jedoch den Wiegand-Draht dauerhaft ummagnetisieren und kann diesen somit schädigen.

Wie bereits oben dargestellt wurde, ist der Diametralmagnet in vorteilhafter Weise scheiben- oder plattenförmig ausgebildet und kann sehr gut ohne größeren Platzbedarf auf der Drehachse angeordnet werden. Darüber hinaus ist der Diametralmagnet in vorteilhafter Weise zylindrisch ausgebildet, wodurch aufgrund der Rotationssymmetrie in der Regel eine geringere Unwucht entsteht.

Bei einem Ausführungsbeispiel der Erfindung kann das Magnetfeld entsprechend derart gestaltet werden, dass es den Wiegand-Draht, insbesondere im Bereich der Mitte des Wiegand-Drahtes, möglichst parallel und homogen durchsetzt und gegebenenfalls, sofern ein Hall-Sensor bzw. Hall-Elemente vorgesehen sind, diese möglichst senkrecht zur stromdurchflossenen Fläche durchsetzt. Diese vorteilhafte Anordnung, die ein möglichst großes Detektionssignal erlaubt, kann beispielsweise dadurch erfolgen, dass der Diametralmagnet stufenförmig ausgebildet ist. Insbesondere bietet es sich aufgrund der Symmetrieüberlegungen an, dass sich der Diametralmagnet geometrisch in zwei scheibenförmige Teilkörper zerlegen lässt, die koaxial zueinander angeordnet sind und rotationssymmetrische, insbesondere zylindrische Geometrie aufweisen. Dem Wiegand-Draht bzw. dem / den Hall-Elemente(n) kann dabei insbesondere der Teilkörper zugewandt sein, der einen kleineren Durchmesser aufweist. Durch diese Maßnahme können die Feldlinien stärker in der Mitte konzentriert werden, da bei zu breit gewählten Magneten die Flussdichte am jeweiligen Hall-Element geringer ausfallen kann.

Gerade in Bezug auf den Hall-Sensor kann die Scheiben- bzw. Plattenform des Diametralmagneten so gewählt werden, dass an der Scheiben- bzw. Zylinderoberfläche Feldlinien im Wesentlichen parallel zur Drehachse austreten und wieder in den Diametralmagnet hinein laufen. Dieser Effekt kann wiederum dazu genutzt werden, dass im Bereich der Hall-Elemente die Feldlinien möglichst senkrecht und homogen vorliegen, wenn die Hall-Elemente nah genug am Diametralmagnet positionierbar sind. In diesem Bereich können die Hall-Elemente, seitlich versetzt zur Drehachse, angeordnet sein, sodass deren Fläche senkrecht durchlaufen werden kann.

Der Wiegand-Draht, der insbesondere weiter vom Diametralmagnet entfernt ist als die Hall-Elemente, wird im Wesentlichen eher von den Feldlinien durchsetzt, die seitlich aus dem scheibenförmigen bzw. zylindrischen Magneten austreten. Im Bereich des Wiegand-Drahtes verlaufen die Feldlinien somit annähernd senkrecht zur Drehachse.

Ein entsprechend gestufter Magnet, der z.B. aus zwei Teilkörpern besteht, die unterschiedlichen Durchmesser bzw. unterschiedliche Querschnittsfläche aufweisen, bietet somit die Möglichkeit, das Feld optimal an die näher liegenden Hall-Elemente und den weiter entfernten Wiegand-Draht anzupassen. Ist der kleinere Teilkörper den Sensoren zugewandt, so wird im Nahfeld ein im Wesentlichen senkrecht aus der Platte des Magneten austretendes Feld erzeugt, während im weiter entfernten Bereich der Wiegand-Draht im Wesentlichen entlang seiner Längsrichtung durchsetzt werden kann. Somit ist auch zu erwarten, dass die Signalstärke bei einer derartigen Anordnung optimiert wird. Zudem besteht bei einem derartigen Körper die Möglichkeit, diesen rotationssymmetrisch um die Drehachse anzuordnen, sodass im Idealfall keine Unwucht auftritt.

Um die Ausrichtung der Feldlinien in einer Ebene, in der auch die Drehachse liegt und in der oder parallel zu der grundsätzlich auch der Wiegand-Draht ausgerichtet ist, bündeln zu können, kann der Diametralmagnet auch an zwei, in Bezug zur Drehachse gegenüberliegenden Seiten abgeflacht sein, insbesondere mit parallel zueinander verlaufenden Seitenflächen um eine Punktsymmetrie zu gewährleisten.

Das bzw. wenigstens eines der Hall-Elemente, Wiegand-Draht und Permanentmagnet können bei einer Ausführungsvariante der Erfindung fluchtend zueinander angeordnet sein, wobei die einzelnen Hall-Elemente auch seitlich versetzt zur Drehachse angeordnet werden können, da ein Hall-Element somit senkrecht zunächst nur von den eintretenden oder austretenden Feldlinien aus dem Magneten durchsetzt wird.

In einer Ausführungsform der Erfindung können insbesondere Wiegand-Draht und Hall-Elemente (in Bezug auf einen platten- bzw. scheibenförmigen Diametralmagneten) auf der gleichen Seite des Permanentmagneten angeordnet sein, sodass eine möglichst kompakte Bauweise realisiert werden kann. Denkbar ist es grundsätzlich aber auch, dass Hall-Elemente und Wiegand-Draht auf verschiedenen Seiten (in Bezug auf einen platten- bzw. scheibenförmigen Diametralmagneten) angeordnet werden.

Der Hall-Sensor kann bei einer Ausführungsvariante von der Drehachse durchstoßen werden. Es ist aber vorteilhaft, damit die Magnetfeldlinien das entsprechende Hall-Element zu bestimmten Zeitpunkten immer in einer Richtung durchstoßen können, dass das bzw. die Hall-Elemente seitlich versetzt zur Drehachse angeordnet ist/sind, um in diesem Zeitpunkt z.B. vollständig über dem Nord- bzw. Südpol zu liegen. Der Wiegand-Draht kann grundsätzlich von der Drehachse durchstoßen werden.

Um einen möglichst guten Umlenkungseffekt zu erzielen, ist bei der Erfindung das Beeinflussungselement zunächst flächig ausgebildet. Das Beeinflussungselement schirmt jedoch den Wiegand-Draht nicht zu allen Seiten hin ab, da das Nutzmagnetfeld zur Detektion den Wiegand-Draht erreichen muss. Insofern ist es insbesondere vorteilhaft, dass das Beeinflussungselement an der dem Diametralmagneten zugewandten Seite und/oder an den Bereichen der Drahtenden offen ausgebildet ist. Um eine vorteilhafte Beeinflussung der Felder, denen der Wiegand-Draht ausgesetzt ist, zu gewährleisten, kann das Beeinflussungselement Störfelder an drei Seiten des Wiegand-Drahtes umlenken.

Bei einer vorteilhaften Ausführungsform der Erfindung ist das Beeinflussungselement an den Seiten in Richtung des Wiegand-Drahtes offen ausgebildet, da bei der bestehenden Anordnung des Diametralmagneten die Feldlinien im Wesentlichen parallel zum Wiegand-Draht verlaufen. Die flächigen Bereiche des Beeinflussungselements können den Wiegand-Draht, gesehen in Längsrichtung des Drahtes, überdecken.

Blickt man in Richtung der Längserstreckung des Wiegand-Drahtes, so kann das Beeinflussungselement in seinem Querschnitt U-förmig ausgebildet sein.

Grundsätzlich ist es vorteilhaft, dass das Beeinflussungselement nicht den Draht entlang seiner gesamten Erstreckung überdeckt. Die Umlenkung sollte zum einen vor allem im mittleren Bereich entlang der Längserstreckung des Drahtes erfolgen, da in Bezug auf die sensorischen Eigenschaften des Drahtes hier die für die Messung wesentlichen Ummagnetisierungen stattfinden. An den Enden des Drahtes können etwaige Entmagnetisierungseffekte nach Möglichkeit vermieden werden, die das Signal stören würden.

Da das Beeinflussungselement insbesondere dann, wenn es den Draht zu drei Seiten hin überdeckt, auch in der Lage ist, das Nutzfeld möglichst parallel und homogen entlang der Längserstreckung des Drahtes auszurichten, ist es vorteilhaft, wenn das Beeinflussungselement entlang der Längserstreckung des Drahtes die Enden nicht überdeckt. Die Feldlinien können an den Drahtenden im Wesentlichen in Längsrichtung des Wiegand-Drahtes eintauchen. Störende Entmagnetisierungseffekte können in den Endbereichen des Wiegand-Drahtes verringert bzw. vermieden werden.

Um den magnetischen Fluss möglichst konzentriert in den Draht, jedoch eher in dessen Mittenbereich einleiten zu können, können an den Enden des Drahtes Ferrit-Perlen und/oder Polschuhe, die in diesem Bereich eine geringe Reluktanz (einen geringen magnetischen Widerstand) aufweisen, angeordnet werden. Auf diese Weise können die Feldlinien von den Endbereichen weggelenkt werden und etwas weiter in Richtung Drahtmitte die Polschuhe verlassen, sodass sich das Magnetfeld auf dem mittleren Bereich konzentriert und die angesprochenen störenden Entmagnetisierungseffekte geringer ausfallen.

Die Polschuhe können grundsätzlich verschieden ausgebildet sein. Denkbar ist beispielsweise eine Ausführungsform, bei der die Drahtenden im Wesentlichen in die Polschuhe eingreifen und durch diese der Draht in seiner Längserstreckung begrenzt aber auch seitlich teilweise umgeben wird. Da das magnetische Nutzfeld jedoch hauptsächlich aus einer Richtung kommt, genügt es, im Wesentlichen L-förmige Polschuhe zu verwenden, wobei die Fläche eines der L-Schenkel den Wiegand-Draht in seiner Ausdehnungsrichtung begrenzt und die andere Fläche des L-förmigen Schenkels dem Permanentmagneten zugewandt ist. Auf diese Art und Weise kann der Polschuh möglichst kompakt ausgebildet und Material gegenüber sonstigen Ausführungsformen mit den Draht umschließenden Polschuhen eingespart werden.

Das Beeinflussungselement muss grundsätzlich nicht als einstückiger, durchgehender Metallkörper bzw. durchgehendes Metallblech ausgebildet sein. Insbesondere können wenigstens zwei, insbesondere drei der Teilflächen nicht magnetisch leitend miteinander verbunden sein. Beispielsweise können zwei L-förmige, flächige Elemente, die jeweils selbst magnetisch leitend ausgebildet sind, miteinander (mechanisch) verbunden werden, ohne jedoch untereinander eine magnetisch leitende Verbindung zu besitzen. Eine solche Ausbildung kann die Feldlinien gezielt umlenken, da die Feldlinien im Material nicht durch das vollständige Beeinflussungselement entlang von dessen Kontur laufen. Das Feld innerhalb des Beeinflussungselementes kann entlang der Drahtrichtung in verbesserter Weise homogenisiert werden.

Es hat sich als besonders vorteilhaft herausgestellt, eine Ausführungsform der Erfindung vorzusehen, bei welcher der Wiegand-Draht gegenüber dem Hall-Sensor bzw. gegenüber dem/den Hall-Element/en den fünf- bis neunfachen, in besonders bevorzugter Weise den siebenfachen Abstand zum Diametralmagneten aufweist. Auf diese Weise erhält einerseits der Hall-Sensor ein möglichst starkes Feld und wird auch relativ homogen in Richtung entlang der Drehachse durchflossen, während der Wiegand-Draht einem entsprechend demgegenüber hinsichtlich der Feldstärke schwächerem Feld ausgesetzt ist und im Wesentlichen parallel durchflossen werden kann.

Das Beeinflussungselement kann somit eine Ausführungsvariante der Erfindung in vorteilhafter Weise ein magnetisch leitendes Blech umfassen oder insgesamt aus einem magnetisch leidenden Blech gefertigt sein.

Wie bereits dargestellt, kann ein verwendeter Hall-Sensor grundsätzlich mehrere Hall-Elemente umfassen. Insbesondere können mehrere Hall-Elemente so in einer Ebene angeordnet sein, die von der Drehachse durchstoßen wird, dass diese punktsymmetrisch um den Durchstoßpunkt der Ebene mit der Drehachse angeordnet sind. Auf diese Art und Weise erfassen unterschiedliche Hall-Elemente unterschiedliche Bereiche des Magnetfeldes, und es ist eine genauere Erfassung der Rotationsbewegung möglich, da das Feld des Diametralmagneten an verschiedenen Stellen gleichzeitig erfasst werden kann. Zum Beispiel liegen zu einem bestimmten Zeitpunkt Hall-Elemente über dem Nordpol oder Südpol oder über dem Übergangsbereich zwischen Nord- und Südpol.

Grundsätzlich können bei Ausführungsbeispielen der Erfindung der Wiegand-Sensor und der Hall-Sensor auch wie folgt verwendet werden: Der Hall-Draht wird im spannungslosen Zustand betrieben. Die Induktionsspule, die den Wiegand-Draht umgibt, ist mit dem wenigstens einen Hall-Element gekoppelt, d.h. die an das jeweilige Hall-Element angelegte Spannung wird von der Induktionsspule geliefert.

Ferner ist aber auch denkbar, einen vom Hall-Sensor separat betriebenen Wiegand-Sensor einzusetzen, dessen Spannungspulse ausgewertet werden können.

### Ausführungsbeispiele

Ausführungsbeispiele der Erfindung werden in den Zeichnungen dargestellt und sind nachstehend unter Angabe weiterer Einzelheiten und Vorteile näher erläutert. Im Einzelnen zeigen:
- Fig. 1 bis 4 und 6 bis 9:: verschiedene Maschinenkomponenten gemäss der Erfindung sowie
- Fig. 5:: eine Maschinenkomponente mit Wiegand-Draht mit Polschuhen und Hall-Element, jedoch ohne Beeinflussungselement sowie
- Fig. 10: Darstellung von Abstandsverhältnissen der Elemente zueinander.

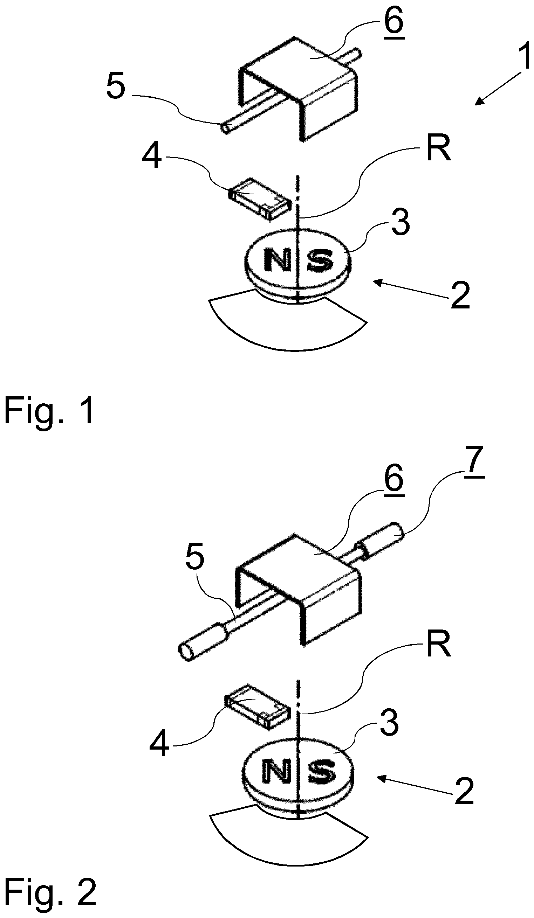

Figur 1 zeigt eine Maschinenkomponente 1, bei welcher der Rotor 2 einen auf der Drehachse R angebrachten Permanentmagnet in Form eines Diametralmagneten 3 aufweist. Der Diametralmagnet 3 ist scheibenförmig ausgebildet, wobei die Aufteilung in Nordpol N und Südpol S entlang einer Achse durch die Drehachse R der Scheibe verläuft.

Oberhalb des Diametralmagneten 3 ist ein Hall-Element 4 als Teil eines Hall-Sensors angeordnet. Das Hall-Element 4 ist seitlich versetzt zur Drehachse R platziert. Auf der gleichen Seite des Diametralmagneten 3 ist auch der Wiegand-Draht 5 als Teil eines Wiegand-Sensors angeordnet. Eine den Wiegand-Draht umgebende Induktionsspule, in welcher beim Auftreten einer Ummagnetisierung im Wiegand-Draht 5 ein Spannungspuls erzeugt wird, ist nicht dargestellt.

Der Wiegand-Draht 5 wird teilweise umschlossen von einem Beeinflussungselement 6 in Form eines magnetisch leitfähigen Blechs, das in seinem Querschnitt, gesehen entlang der Längsrichtung des Wiegand-Drahtes 5, U-förmig ausgebildet ist und somit den Wiegand-Draht 5 zu drei Seiten hin abdeckt. Der Wiegand-Draht 5 wird von der Drehachse R durchstoßen.

Figur 2 unterscheidet sich im Wesentlichen dadurch von Figur 1, dass an den Enden des Wiegand-Drahtes 5 zusätzliche Ferrit-Perlen 7 angeordnet sind, die es ermöglichen, dass die Feldlinien des vom Diametralmagneten 3 erzeugten Nutzmagnetfeld nicht unmittelbar in die Endbereiche des Wiegand-Drahtes 5 eingeleitet werden, sondern diese sich eher auf den mittleren Bereich entlang der Längserstreckung des Wiegand-Drahtes 5 konzentrieren, sodass in vorteilhafter Weise Entmagnetisierungseffekte an den Enden des Wiegand-Drahtes 5 vermieden werden können, welche die Messung durch den Wiegand-Draht 5 eher stören würden.

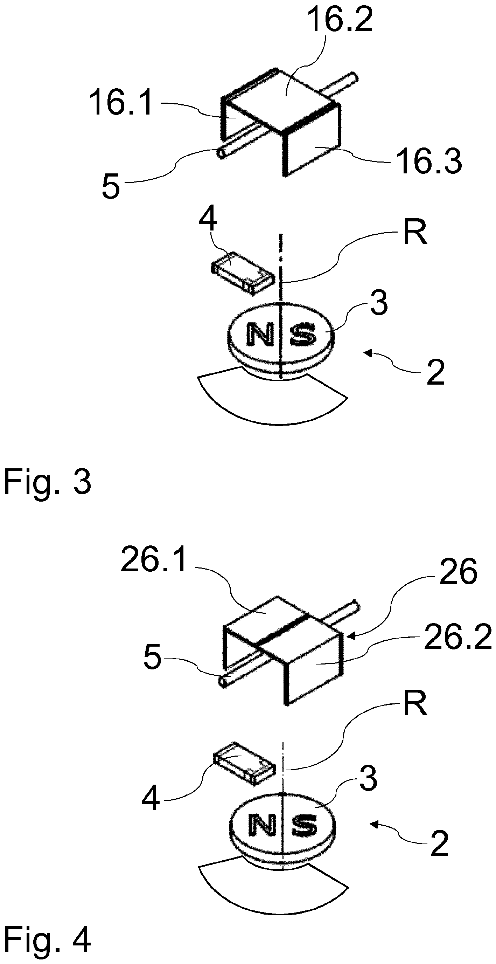

Die Ausführungsform gemäß Figur 3 unterscheidet sich wiederum dadurch von der gemäß Figur 1 (oder auch Figur 2), dass das Beeinflussungselement 16 nicht aus einem durchgehend magnetisch leitfähigen Material ausgebildet ist, sondern sich aus drei Teilen 16.1, 16.2, 16.3 zusammensetzt, von denen jede den Wiegand-Draht auf einer Seite überlappt. Die drei Bestandteile 16.1, 16.2 und 16.3 wiederum stellen ein mechanisch zusammenhängendes Bauteil dar, sind also miteinander verbunden. Diese Verbindung zwischen den Teilen 16.1, 16.2, 16.3 wiederum erfolgt jedoch nicht über ein magnetisch leitfähiges Material. Durch diese Ausbildung kann bei diesem Ausführungsbeispiel der Beeinflussungseffekt des Nutzfeldes verbessert werden.

Bei der Ausführungsform nach Figur 4 setzt sich das Beeinflussungselement 26 wiederum aus zwei jeweils magnetisch leitfähigen Blechabschnitten 26.1, 26.2 zusammen, die jeweils L-förmig ausgebildet sind. Diese können ebenfalls miteinander verbunden sein, sodass das Beeinflussungselement 26 als ein mechanisch zusammenhängendes Teil ausgebildet ist. Die Teile 26.1 und 26.2 sind jedoch nicht durch ein magnetisch leitfähiges Material miteinander verbunden. Auch hierdurch kann entsprechend die Homogenisierung des Nutzmagnetfeldes im Bereich des mittleren Wiegand-Drahtes verbessert werden.

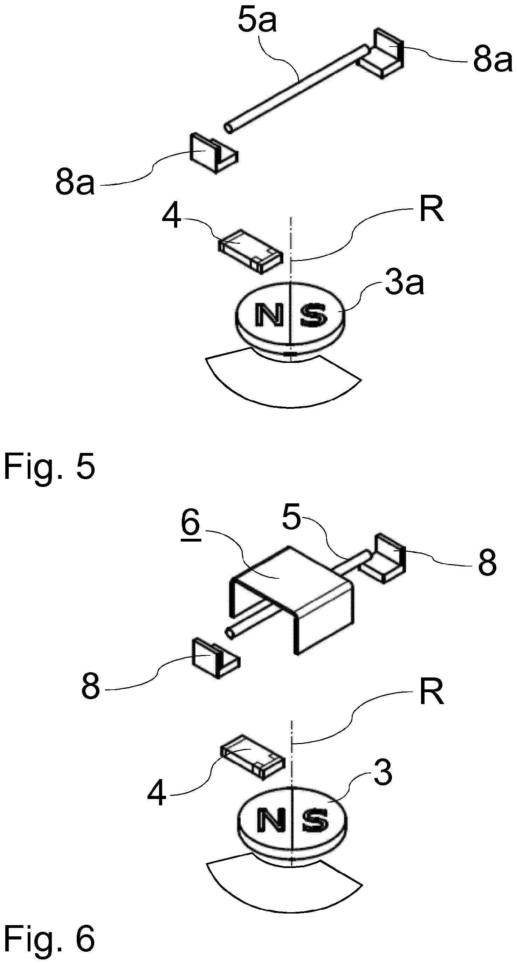

Eine nicht zur Erfindung gehörende Maschinenkomponente ist wiederum in Figur 5 dargestellt. Bei dieser fehlt es an dem Beeinflussungselement, welches der Konzentration und Homogenisierung des Nutzmagnetfeldes im Bereich des mittleren Wiegand-Drahtes sowie der Umlenkung störender Felder dient. Ansonsten ist auch hier auf der Drehachse R ein Diametralmagnet 3a angeordnet. Darüber, seitlich versetzt zur Drehachse R, ist wiederum ein Hall-Element 4a und in größerer Entfernung wiederum ein Wiegand Draht 5a vorgesehen. Dieser Wiegand-Draht 5a wird an den Enden teilweise von Polschuhen 8a begrenzt bzw. überlappt, die in einem Querschnitt L-förmig ausgebildet sind. Die Flanke eines Schenkels eines L-förmige Polschuhs 8a zeigt in Richtung des Permanentmagneten 3a, während die andere Fläche des Schenkels des Polschuhs 8a senkrecht jeweils zur Ausrichtung des Wiegand-Drahtes 5a steht. Diese Polschuhe sind aus einem magnetisch leitfähigen Material, vorzugsweise aus einem Ferromagneten ausgebildet, d.h. sie leiten sehr gut die Magnetfeldlinien. Erst im Bereich einer geringeren Reluktanz zur Mitte des Wiegand-Drahtes 5a hin verlassen die Feldlinien verstärkt die Polschuhe 5a (8a) und laufen zum bzw. in den Wiegand-Draht 5a.
In besonders vorteilhafter Weise ergibt sich somit gemäß Figur 6 ein erfindungsgemäßes Ausführungsbeispiel, bei dem die Polschuhe 8, im Wesentlichen identisch mit den Polschuhen 8a zu einem Ausführungsbeispiel gemäß Figur 1 ergänzt werden. Bei dieser vorteilhaften Ausführungsform erfolgt somit durch das Beeinflussungselement 6 eine Homogenisierung des Feldes im mittleren Bereich des Wiegand-Drahtes 5 entlang dessen Längserstreckung und zudem auch eine Umlenkung von Störfeldern, sofern diese vorhanden sind. Die Polschuhe 8 sorgen wiederum dafür, dass das Nutzmagnetfeld, das vom Diametralmagnet 3 erzeugt wird, möglichst von den Enden weg in die Mitte des Wiegand-Drahtes gelenkt wird, um störende Entmagnetisierungseffekte an den Endbereichen des Wiegand-Drahtes 5 zu vermeiden.

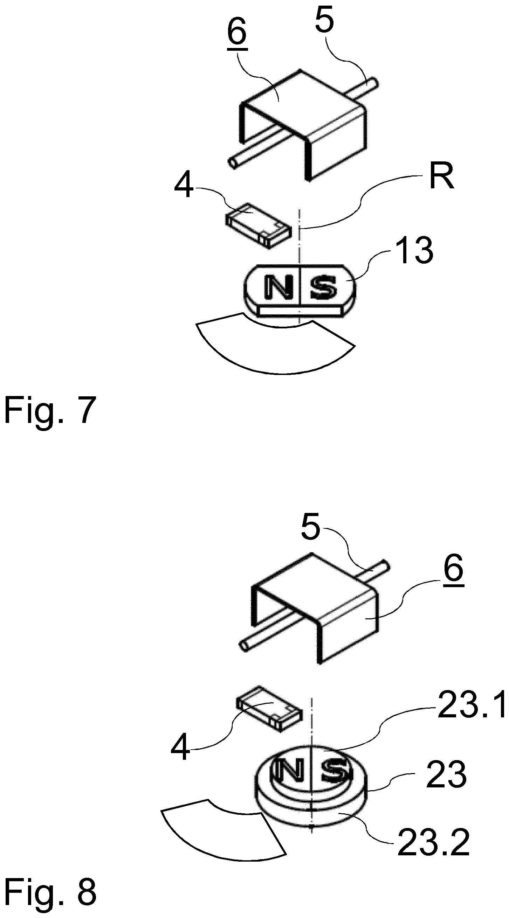

In den Figuren 7 und 8 werden Ausführungsbeispiele gezeigt, die sich dadurch vom Ausführungsbeispiel gemäß Figur 1 unterscheiden, dass unterschiedlich geformte Diametralmagnete 13, 23 eingesetzt werden. Bei der Ausführungsform nach Figur 7 liegt ein Diametralmagnet 13 vor, der an zwei seitlich in Bezug auf die Drehachse R gegenüberliegenden Bereichen abgeflacht ist. Der ansonsten scheibenförmige Diametralmagnet 13 erhält also eher die Form eines Längsbalkens. Der wesentliche Vorteil besteht darin, dass dadurch, dass die Abflachung senkrecht zur Nord-Süd-Erstreckung erfolgt, die Feldlinien stärker in einer Ebene, die von der Nord-Süd-Achse und der Drehachse aufgespannt wird, konzentriert wird. Der Strompuls, der im Wiegand-Sensor durch das umklappen der unterschiedlichen Magnetisierungsbereiche hervorgerufen wird, kann durch diese Konzentration der Feldlinien verstärkt werden. Je nach Verwendung kann diese Form des Diametralmagneten 13 auch weniger bevorzugt werden, weil durch die nicht rotationssymmetrisch ausgebildete Form des Diametralmagneten 13 bei der Rotation um die Drehachse eine Unwucht entstehen kann.

Dies kann jedoch ausgeglichen werden, indem der Diametralmagnet 13 zum Beispiel in ein Gehäuse eingebettet wird, wobei das Gehäuse sich in Bezug auf den Verlauf der Feldlinien im Wesentlichen neutral verhalten kann, die Gewichtsverteilung am Rotor jedoch ausgleicht, sodass auch die Unwucht entsprechend ausgeglichen wird.

In der Figur 8 ist ein Diametralmagneten 23 gezeigt, welcher sich in zwei Teilkörper 23.1 und 23.2 geometrisch zerlegen lässt, die für sich wiederum jeweils zwei Scheiben mit unterschiedlichem Durchmesser darstellen. Diese Teilkörper 23.1, 23.2 sind koaxial zueinander angeordnet, wobei die Drehachse mit deren Mittenachse zusammenfällt. Nordpol N und Südpol S fallen in ihrer Ausrichtung ebenfalls zusammen. Der Teilkörper 23.1 ist näher an den Sensoren, d.h. dem Hall-Element 4 und dem Wiegand-Draht 5 angeordnet. Die Feldlinien, die parallel zur Drehachse R aus dem Permanentmagneten 23 (und senkrecht zur Oberfläche der plattenförmigen Teilkörper) austreten, konzentrieren sich stärker im Bereich, der näher zur Drehachse R liegt. Somit treten diese auch verstärkt dort auf, wo das Hall-Element 4 angeordnet ist, etwas seitlich versetzt zur Drehachse R und können das Hall-Element 4 senkrecht durchstoßen.

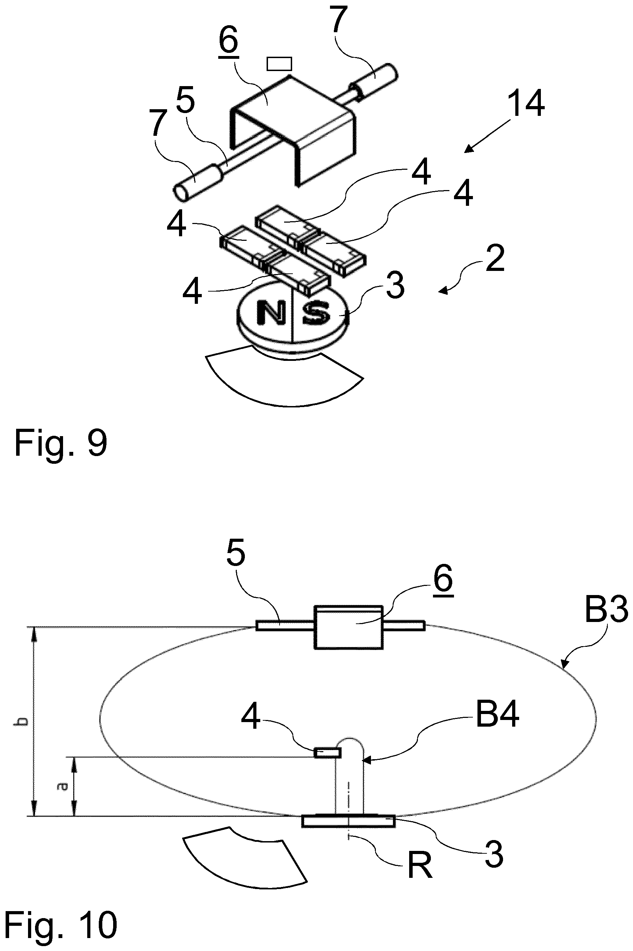

Die besonders bevorzugte Ausführungsform ist in Figur 9 dargestellt. Sie weist an den Enden des Wiegand-Drahtes 5 jeweils Ferrit-Perlen 7 auf. Ein Hall-Sensor 14 umfasst vier Hall-Elemente 4, die in einer Ebene angeordnet sind, die senkrecht von der Drehachse R durchstoßen wird, und um diesen Durchstoßpunkt wiederum punktsymmetrisch angeordnet sind. Die Polschuhe 8 können sich zwar grundsätzlich als vorteilhaft erweisen, um die Feldlinien eher in Richtung Drahtmitte zu leiten, können aber auch bei einer kompakten Bauweise des Sensors aufwändig anzubringen sein, sodass sie bei dieser Ausführungsform weggelassen wurden. Bei einer Drehung des Diametralmagneten 3 liegen jeweils die einen Hall-Elemente 4 zum gleichen Zeitpunkt über dem Nordpol N, die anderen über dem Südpol S oder im Übergansbereich zwischen Nordpol N und Südpol S. Durch diese vier Messsignale kann somit die Bestimmung der Winkelposition, aber auch der Drehzahl genauer erfolgen.

In der Figur 10 sind wesentliche Feldlinien B1 und B2 in einer Prinzipdarstellung skizziert. Insbesondere sind die Abstandsverhältnisse vom Diametralmagnet 3 zum Wiegand-Draht 5 und Diametralmagnet 3 zum Hall-Element 4 dargestellt: Der Abstand b zwischen Diametralmagnet 3 und Wiegand-Draht 5 ist etwa siebenmal so groß wie der Abstand a zwischen Diametralmagnet 3 und Hall-Element 4. Auf den Wiegand-Draht 5 wirkt vor allem ein parallel zum Wiegand-Draht 5 gerichtetes Feld B1, während das Hall-Element 4 vor allem senkrecht von den Feldlinien B2 durchdrungen wird.

## Patentansprüche

1. Maschinenkomponente (1), umfassend:
- einen Rotor (2) zur Ausführung einer Rotationsbewegung um eine Drehachse (R) und einen am Rotor (2) angebrachten, mitrotierenden Permanentmagneten zur Erzeugung eines Nutzmagnetfeldes (B1, B2),
- einen Wiegand-Sensor zur Erfassung der Rotationsbewegung, insbesondere der Position und / oder Drehzahl des Rotors, welcher einen Wiegand-Draht (5) aufweist, der gegenüber dem Rotor (2) statisch und in einer Ebene senkrecht zur Drehachse (R) angeordnet ist, wobei
der Permanentmagnet als Diametralmagnet (3) ausgebildet ist, und die Drehachse (R) durch die Trennlinie zwischen Nordpol (N) und Südpol (S) des Diametralmagneten (3) verläuft, wobei ein Beeinflussungselement (6, 16, 26) zur Beeinflussung des Nutzmagnetfeldes (B1, B2) vorgesehen ist
**dadurch gekennzeichnet, dass**
das Beeinflussungselement (6, 16, 26) flächig ausgebildet ist und den Wiegand-Draht (5) zu drei Seiten entlang dessen axialer Erstreckung überdeckt, wobei das Beeinflussungselement (6) auf der dem Diametralmagnet (3) zugewandten Seite hin offen ist und wobei das Beeinflussungselement (6, 16, 26) den Wiegand-Draht (5) entlang dessen axialer Erstreckung zumindest in dessen mittlerem Bereich an den drei Seiten überdeckt.

2. Maschinenkomponente (1) nach Anspruch 1, **dadurch gekennzeichnet, dass** Beeinflussungselement (6) U-förmig ausgebildet ist.

3. Maschinenkomponente (1) nach einem der vorgenannten Ansprüche, **dadurch gekennzeichnet, dass** der Diametralmagnet (3) hinsichtlich seiner Formgebung in Bezug auf die Drehachse (R) rotationssymmetrisch und/oder in Bezug auf seinen Schnittpunkt mit der Drehachse (R) punktsymmetrisch ausgebildet ist.

4. Maschinenkomponente (1) nach einem der vorgenannten Ansprüche, **dadurch gekennzeichnet, dass** die Drehachse (R) durch den Wiegand-Draht (5) verläuft und/oder der Wiegand-Draht (5) windschief zur Drehachse (R) angeordnet ist.

5. Maschinenkomponente (1) nach einem der vorgenannten Ansprüche, **dadurch gekennzeichnet, dass** mindestens ein Hall-Element (4) zur Erfassung der Rotationsbewegung, insbesondere der Drehrichtung und/oder der Drehzahl und/oder der Drehposition des Rotors (2), vorgesehen ist, der gegenüber dem Rotor (2) statisch angeordnet ist, wobei der Wiegand-Sensor und/oder der Wiegand-Draht (5) vom Diametralmagneten (3) weiter beabstandet ist als das mindestens eine Hall-Element (4).

6. Maschinenkomponente (1) nach einem der vorgenannten Ansprüche, **dadurch gekennzeichnet, dass** der Diametralmagnet (3, 13, 23):
- scheibenförmig ausgebildet ist und/oder
- zylindrisch ausgebildet ist und/oder
- sich geometrisch aus wenigstens zwei scheibenförmigen und/oder zylindrischen Teilkörpern (23.1, 23.2) zusammensetzt, die koaxial angeordnet sind, wobei vorzugsweise die Teilkörper (23.1, 23.2) rotationssymmetrische Geometrien, insbesondere unterschiedliche Durchmesser und/oder verschiedene Konturen aufweisen und besonders bevorzugt der Teilkörper (23.1, 23.2) mit kleinerem Durchmesser dem Wiegand-Draht (5) und/oder einem Hall-Sensor (14) und/oder Hall-Element (4) zugewandt ist und/oder
- auf zwei gegenüberliegenden Seiten der Drehachse (R) abgeflacht, vorzugsweise mit parallel zueinander verlaufenden Seitenflächen, ist.

7. Maschinenkomponente (1) nach einem der Ansprüche 5 oder 6, **dadurch gekennzeichnet, dass** der Hall-Sensor (14) und/oder mindestens eines der Hall-Elemente (4), der Wiegand-Draht (5) und der Diametralmagnet (3) fluchtend zueinander angeordnet sind, wobei insbesondere:
- die einzelnen Hall-Elemente (4) seitlich versetzt zur Drehachse (R) angeordnet sind und/oder
- die Drehachse (R) den Wiegand-Draht (5) und/ oder den Hall-Sensor (14) durchstößt und/oder
- der Wiegand-Draht (5) und mindestens eines der Hall-Elemente (4) auf der gleichen Seite des Diametralmagneten (3) angeordnet sind.

8. Maschinenkomponente (1) nach einem der Ansprüche 5 bis 7, **dadurch gekennzeichnet, dass** ein Abstand einer dem Wiegand-Draht (5) zugewandten Oberfläche des Diametralmagneten (3) zu dem Wiegand-Draht (5) mindestens den fünffachen bis neunfachen, insbesondere den siebenfachen Wert eines Abstandes einer zu einem der Hall-Elemente (4) zugewandten Oberfläche des Diametralmagneten (3) zu diesem Hall-Elemente (4) aufweist.

9. Maschinenkomponente (1) nach einem der vorgenannten Ansprüche, **dadurch gekennzeichnet, dass** im Bereich der Enden des Wiegand-Drahtes (5) jeweils eine Ferrit-Perle (7) angeordnet ist.

10. Maschinenkomponente (1) nach einem der vorgenannten Ansprüche, **dadurch gekennzeichnet, dass** im Bereich der Enden des Wiegand-Drahtes (5) jeweils ein Polschuh (8) zur Ablenkung der Feldlinien (B1) des Nutzmagnetfelds angeordnet ist.

11. Maschinenkomponente (1) nach Anspruch 10, **dadurch gekennzeichnet, dass** die Polschuhe (8) jeweils einen L-förmigen Querschnitt aufweisen, wobei eine der Flächen der Schenkel dem Permanentmagnet (3) zugewandt und eine dem Wiegand-Draht (5) abgewandt ist.

12. Maschinenkomponente (1) nach einem der vorgenannten Ansprüche, **dadurch gekennzeichnet, dass** das Beeinflussungselement (16, 26) wenigstens zwei, insbesondere drei nicht magnetisch leitend verbundene Teilflächen (16.1, 16.2, 16.3, 26.1, 26.2), aufweist, insbesondere zwei im Querschnitt L-förmige Teile oder drei Teile, von denen jeder den Wiegand-Draht (5) jeweils an einer der drei Seiten zumindest teilweise überlappt.

13. Maschinenkomponente (1) nach einem der vorgenannten Ansprüche, **dadurch gekennzeichnet, dass** das Beeinflussungselement (6, 16, 26) ein magnetisch leitendes Blech umfasst und/oder aus einem magnetisch leitfähigen Blech gefertigt ist.

14. Maschinenkomponente (1) nach einem der vorgenannten Ansprüche, **dadurch gekennzeichnet, dass** in einer Ebene senkrecht zur Drehachse (R) wenigstens ein, insbesondere zwei oder vier Hall-Elemente (4) angeordnet sind, die vorzugsweise punktsymmetrisch um den Durchstoßpunkt der Ebene mit der Drehachse (R) angeordnet sind.

## Claims

1. Machine component (1), comprising:
- a rotor (2) for executing a rotational movement about an axis of rotation (R) and a co-rotating permanent magnet attached to the rotor (2) to generate a useful magnetic field (B1, B2),
- a Wiegand sensor for detecting the rotational movement, in particular the position and/or rotational speed of the rotor, said sensor having a Wiegand wire (5) arranged statically relative to the rotor (2) and in a plane perpendicular to the axis of rotation (R), whereby
the permanent magnet is designed as a diametral magnet (3), and the axis of rotation (R) extends through the dividing line between the north pole (N) and the south pole (S) of the diametral magnet (3), an influencing element (6, 16, 26) being provided to influence the useful magnetic field (B1, B2),
**characterized in that**
the influencing element (6, 16, 26) is of flat design and covers the Wiegand wire (5) on three sides along its axial direction, the influencing element (6) being open towards the side facing the diametral magnet (3) and the influencing element (6, 16, 26) covering the Wiegand wire (5) along its axial direction, at least in its central area on the three sides.

2. Machine component (1) in accordance with Claim 1, **characterized in that** the influencing element (6) is U-shaped.

3. Machine component (1) in accordance with any one of the above Claims, **characterized in that** the shape of the diametral magnet (3) is designed to be rotationally symmetrical with respect to the axis of rotation (R) and/or point-symmetrical with respect to its point of intersection with the axis of rotation (R).

4. Machine component (1) in accordance with any one of the above Claims, **characterized in that** the axis of rotation (R) runs through the Wiegand wire (5) and/or the Wiegand wire (5) is arranged skew to the axis of rotation (R).

5. Machine component (1) in accordance with any one of the above Claims, **characterized in that** at least one Hall element (4) is provided for detecting the rotational movement, in particular the direction of rotation and/or the rotational speed and/or the rotational position of the rotor (2), said element being arranged statically relative to the rotor (2), and the Wiegand sensor and/or the Wiegand wire (5) being spaced further away from the diametral magnet (3) than the at least one Hall element (4).

6. Machine component (1) in accordance with any one of the above Claims, **characterized in that** the diametral magnet (3, 13, 23):
- is disc-shaped and/or
- is cylindrically shape and/or
- is geometrically composed of at least two disc-shaped and/or cylindrically shaped partial bodies (23.1, 23.2) which are arranged coaxially, whereby preferably the partial bodies (23.1, 23.2) have rotationally symmetrical geometries, in particular different diameters and/or different contours, and whereby particularly preferably the partial body (23.1, 23.2) with the smaller diameter faces the Wiegand wire (5) and/or a Hall sensor (14) and/or Hall element (4) and/or
- is flattened on two opposite sides of the axis of rotation (R), preferably with side surfaces running parallel to each other.

7. Machine component (1) in accordance with any one of Claims 5 or 6, **characterized in that** the Hall sensor (14) and/or at least one of the Hall elements (4), the Wiegand wire (5) and the diametral magnet (3) are arranged in alignment with one another, whereby in particular:
- the individual Hall elements (4) are arranged laterally offset with respect to the axis of rotation (R) and/or
- the axis of rotation (R) intersects the Wiegand wire (5) and/or the Hall sensor (14) and/or
- the Wiegand wire (5) and at least one of the Hall elements (4) are located on the same side of the diametral magnet (3).

8. Machine component (1) in accordance with any one of Claims 5 to 7, **characterized in that** the distance of a surface of the diametral magnet (3) facing the Wiegand wire (5) from the Wiegand wire (5) is at least five times to nine times, in particular seven times, the value of the distance of a surface of the diametral magnet (3) facing one of the Hall elements (4) from this Hall element (4).

9. Machine component (1) in accordance with any one of the above Claims, **characterized in that** a ferrite bead (7) is located in the region of each end of the Wiegand wire (5).

10. Machine component (1) in accordance with any one of the above Claims, **characterized in that** a pole piece (8) for deflecting the field lines (B1) of the useful magnetic field is located in the region of each of the ends of the Wiegand wire (5).

11. Machine component (1) in accordance with Claim 10, **characterized in that** the pole pieces (8) each have L-shaped cross-sections, one of the surfaces of the legs facing the permanent magnet (3) and one facing away from the Wiegand wire (5).

12. Machine component (1) in accordance with any one of the above Claims, **characterized in that** the influencing element (16, 26) has at least two, in particular three non-magnetically conductive connected partial surfaces (16.1, 16.2, 16.3, 26.1, 26.2), in particular two parts with L-shaped cross-sections or three parts, each of which at least partially overlaps the Wiegand wire (5) on one of the three sides.

13. Machine component (1) in accordance with any one of the above Claims, **characterized in that** the influencing element (6, 16, 26) comprises a magnetically conductive sheet metal plate and/or is manufactured from a magnetically conductive sheet metal plate.

14. Machine component (1) in accordance with any one of the above Claims, **characterized in that** at least one, in particular two or four Hall elements (4) are arranged in a plane perpendicular to the axis of rotation (R), said elements preferably being arranged point-symmetrically around the point of intersection of the plane with the axis of rotation (R).

## Revendications

1. Composant machine (1) comprenant :
- un rotor (2) destiné à exécuter un mouvement rotatif autour d'un axe de rotation (R) et un aimant permanent disposé sur le rotor (2) et entraîné en rotation avec ce dernier, permettant de générer un champ magnétique utile (B1, B2),
- un capteur Wiegand destiné à détecter le mouvement rotatif, en particulier la position et/ou la vitesse de rotation du rotor, qui présente un fil de Wiegand (5), qui est disposé de manière statique en face du rotor (2) et dans un plan perpendiculaire à l'axe de rotation (R),
l'aimant permanent se présentant sous la forme d'un aimant diamétrique (3), et l'axe de rotation (R) s'étendant à travers la ligne de séparation entre le pôle nord (N) et le pôle sud (S) de l'aimant diamétrique (3), un élément d'influence (6, 16, 26) étant prévu pour influencer le champ magnétique utile (B1, B2),
**caractérisé en ce que**
l'élément d'influence (6, 16, 26) se présente sous une forme plate et recouvre le fil de Wiegand (5) sur trois côtés le long de sa projection axiale, l'élément d'influence (6) étant ouvert sur le côté tourné vers l'aimant diamétrique (3) et l'élément d'influence (6, 16, 26) recouvrant le fil de Wiegand (5) le long de sa projection axiale au moins dans sa zone médiane sur les trois côtés.

2. Composant machine (1) selon la revendication 1, **caractérisé en ce que** l'élément d'influence (6) se présente sous la forme d'un U.

3. Composant machine (1) selon l'une des revendications précédentes, **caractérisé en ce que** l'aimant diamétrique (3) est conçu en symétrie de rotation par rapport à l'axe de rotation (R) et/ou en symétrie ponctuelle par rapport à son point d'intersection avec l'axe de rotation (R).

4. Composant machine (1) selon l'une des revendications précédentes, **caractérisé en ce que** l'axe de rotation (R) s'étend à travers le fil de Wiegand (5) et/ou le fil de Wiegand (5) est incliné par rapport à l'axe de rotation (R).

5. Composant machine (1) selon l'une des revendications précédentes, **caractérisé en ce qu'**au moins un élément à effet Hall (4) est prévu pour la détection du mouvement rotatif, en particulier du sens de rotation et/ou de la vitesse de rotation et/ou de la position de rotation du rotor (2) et est disposé de manière statique en face du rotor (2), le capteur Wiegand et/ou le fil de Wiegand (5) étant disposé(s) plus loin de l'aimant diamétrique (3) que le ou les éléments à effet Hall (4).

6. Composant machine (1) selon l'une des revendications précédentes, **caractérisé en ce que** l'aimant diamétrique (3, 13, 23) :
- se présente sous la forme d'un disque et/ou
- sous la forme d'un cylindre et/ou
- est composé, de manière géométrique, d'au moins deux corps partiels en forme de disque et/ou de cylindre (23.1, 23.2) disposés de manière coaxiale, les corps partiels (23.1, 23.2) présentant, de préférence, des géométries symétriques en rotation, en particulier différents diamètres et/ou différents contours et le corps partiel (23.1, 23.2) doté d'un plus petit diamètre étant, plus préférentiellement, tourné vers le fil de Wiegand (5) et/ou un capteur à effet Hall (14) et/ou un élément à effet Hall (4) et/ou
- est aplati sur deux côtés opposés de l'axe de rotation (R), de préférence avec des surfaces latérales parallèles l'une par rapport à l'autre.

7. Composant machine (1) selon l'une des revendications 5 ou 6, **caractérisé en ce que** le capteur à effet Hall (14) et/ou au moins un parmi les éléments à effet Hall (4), le fil de Wiegand (5) et l'aimant diamétrique (3) sont alignés les uns avec les autres, en particulier :
- les différents éléments à effet Hall (4) étant décalés sur le côté par rapport à l'axe de rotation (R) et/ou
- l'axe de rotation (R) passant à travers le fil de Wiegand (5) et/ou le capteur à effet Hall (14) et/ou
- le fil de Wiegand (5) et au moins un des éléments à effet Hall (4) étant disposés sur le même côté de l'aimant diamétrique (3).

8. Composant machine (1) selon l'une des revendications 5 à 7, **caractérisé en ce qu'**une distance entre une surface de l'aimant diamétrique (3) tournée vers le fil de Wiegand (5) et le fil de Wiegand (5) représente au moins cinq à neuf fois, en particulier sept fois la valeur d'une distance entre une surface de l'aimant diamétrique (3) tournée vers l'un des éléments à effet Hall (4) et cet élément à effet Hall (4).

9. Composant machine (1) selon l'une des revendications précédentes, **caractérisé en ce qu'**une perle de ferrite (7) est disposée dans la zone des extrémités du fil de Wiegand (5).

10. Composant machine (1) selon l'une des revendications précédentes, **caractérisé en ce qu'**une masse polaire (8) est disposée dans la zone des extrémités du fil de Wiegand (5) pour dévier les lignes de force (B1) du champ magnétique utile.

11. Composant machine (1) selon la revendication 10, **caractérisé en ce que** les masses polaires (8) présentent chacune une section transversale en forme de L, une des surfaces des branches étant tournée vers l'aimant permanent (3) et l'une étant opposée au fil de Wiegand (5).

12. Composant machine (1) selon l'une des revendications précédentes, **caractérisé en ce que** l'élément d'influence (16, 26) présente au moins deux, en particulier trois surfaces partielles (16.1, 16.2, 16.3, 26.1, 26.2) non raccordées en conduction magnétique, en particulier deux pièces à section transversale en forme de L ou trois pièces, parmi lesquelles chacune chevauche au moins partiellement le fil de Wiegand (5) sur un des trois côtés.

13. Composant machine (1) selon l'une des revendications précédentes, **caractérisé en ce que** l'élément d'influence (6, 16, 26) comprend une tôle conductrice magnétique et/ou est fabriqué à partir d'une tôle conductrice magnétique.

14. Composant machine (1) selon l'une des revendications précédentes, **caractérisé en ce que**, dans un plan perpendiculaire à l'axe de rotation (R), se trouvent au moins un, en particulier deux ou quatre éléments à effet Hall (4), disposés de préférence en symétrie ponctuelle de part et d'autre du point de percée du plan avec l'axe de rotation (R).
